Europäisches Patentamt

European Patent Office

Office européen des brevets

(19)

(11) Numéro de publication: **0 066 487**
**B1**

(12) ## FASCICULE DE BREVET EUROPEEN

(45) Date de publication du fascicule du brevet:
**24.10.84**

(51) Int. Cl.³: **H 04 N 7/00**

(21) Numéro de dépôt: **82400832.0**

(22) Date de dépôt: **05.05.82**

(54) **Système de diffusion de données et équipements d'émission et de réception utilisés dans un tel système.**

(30) Priorité: **14.05.81 FR 8110089**

(43) Date de publication de la demande:
**08.12.82 Bulletin 82/49**

(45) Mention de la délivrance du brevet:
**24.10.84 Bulletin 84/43**

(84) Etats contractants désignés:
**BE DE GB NL**

(56) Documents cités:
**FR - A - 2 466 917**

(73) Titulaire: **Etablissement Public de Diffusion dit "Télédiffusion de France", 21-27 rue Barbès, F-92120 Montrouge (FR)**
Titulaire: **L'Etat Français, représenté par le Ministre des P.T.T. (Centre National d'Etudes des Télécommunications), 38-40 rue du Général Leclerc, F-92131 Issy-les-Moulineaux (FR)**

(72) Inventeur: **Noirel, Yves Maurice, Le Chesnot Breteil, F-35160 Montfort (FR)**

(74) Mandataire: **Le Guen, Louis François, 13, rue Emile Bara BP 91, F-35802 Dinard Cedex (FR)**

## Description

La présente invention concerne un système de transmission unidirectionnel de données.

Parmi les systèmes de transmission unidirectionnel de données du type de celui de la présente invention, on peut citer le brevet FR-A No 2313825, son certificat d'addition FR-A No 2393480, le brevet FR-A No 2404350 et le brevet EP-A No 0026708.

Dans ces systèmes de transmission unidirectionnels ou de télédiffusion de données, les données transmises sont arrangées en paquets, chaque paquet ayant, au maximum, la durée active d'une ligne d'image de télévision. Les paquets sont insérés, soit à la place des signaux d'images, soit à la place des lignes de retour en trame, entre les signaux de synchronisation classiques des lignes de télévision.

Chaque paquet diffusé commence par un préfixe contenant, outre des signaux de synchronisation d'éléments binaires et d'octets classiques et des signaux de code d'identification de voie, un signal de format de paquet indiquant la longueur de la suite de données qui suit le préfixe. Plus précisément, dans le paquet, les données utiles et les données qui composent le préfixe sont groupées en octets. Donc, le signal de format est un octet qui indique le nombre d'octets de données utiles qui suit le préfixe.

Les essais effectués sur un système de transmission conforme au système défini ci-dessus et utilisant comme support de transmission un réseau public de télédiffusion ont montré qu'il était nécessaire de protéger les données du paquet contre les erreurs de transmission, la même conclusion étant valable pour les informations contenues dans le préfixe. Comme le paquet est formé d'octets, il est particulièrement simple de prévoir une protection contre les erreurs et une correction d'erreurs octet par octet. Il est alors naturel d'adopter une structure d'octets conforme à un code de Hamming, c'est-à-dire une structure dans laquelle, par exemple, les éléments binaires $b_1$, $b_3$, $b_5$ et $b_7$ sont réservés à la correction d'erreurs, tandis que les éléments binaires $b_2$, $b_4$, $b_6$ et $b_8$ portent les données.

Dans le brevet EP-A No 0026708, on a prévu un système permettant, en utilisant une convention prédéterminée, de n'utiliser qu'un seul octet de format dans chaque préfixe de paquet, l'octet de format comprenant quatre éléments binaires porteurs d'information et quatre éléments binaires de correction d'erreurs éventuelles de transmission, pour des paquets de données utiles comportant éventuellement plus de 16 octets et, en particulier, jusqu'à 51 octets utiles.

Un objet de la présente invention consiste à prévoir un système permettant, en plus des données classiques du type télétexte, telles que les données du système Antiope, de diffuser, vers des récepteurs plus sophistiqués, des flux de données ayant des structures qui offrent des possibilités de correction d'erreurs et de chiffrement qui, par exemple, sont définies dans le projet de norme ISO 7498 relative à l'architecture des réseaux d'interconnexion des systèmes de transmission de données ouverts. Bien entendu, la transmission de ces données spéciales doit être compatible avec celle des données de télétexte, c'est-à-dire que le moyen de transmission doit rester commun et que la mise en œuvre du nouveau système ne doit pas entraîner de modifications sensibles dans les récepteurs existants.

Suivant une caractéristique de la présente invention, il est prévu un système de diffusion de données dans lequel la station émettrice diffuse, sous forme de paquets, des données numériques provenant éventuellement de plusieurs voies, chaque paquet comportant un préfixe contenant, outre des signaux de synchronisation classiques et de code d'identification de voie, un signal de format de paquet indiquant normalement la longueur de la suite de données qui suit le préfixe, la station émettrice comportant autant de coupleurs que de voies, chaque coupleur comprenant un circuit d'entrée dont l'entrée est reliée à la sortie de la voie associée au coupleur et dont la sortie est reliée à une mémoire de données dont la sortie peut être connectée à un circuit de multiplexage sous la commande d'un circuit de commande commun à tous les coupleurs, et un compteur alimenté à une cadence prédéterminée, l'ordre d'inhibition du circuit d'entrée étant donné soit dès que ladite mémoire est pleine, soit dès que ledit compteur a atteint un compte prédéterminé, après quoi ladite mémoire est connectée au circuit de multiplexage, puis vidée, ledit compteur est remis à zéro et l'ordre d'inhibition supprimé, un registre ayant une capacité maximale ajustable provoquant ledit ordre d'inhibition quand le compte desdites données atteint une valeur prédéterminée, caractérisé en ce qu'entre ladite mémoire et ledit circuit d'entrée est prévue une mémoire-tampon de petite capacité, la lecture des données de la mémoire-tampon étant commandée par un programmateur, caractérisé en ce qu'il est prévu un fil supplémentaire entre chaque voie et son coupleur associé, ledit fil supplémentaire pouvant être porté à un niveau 1 (ou 0), et en ce que chaque coupleur comprend des premiers moyens de commutation pour isoler ledit compteur alimenté à une cadence prédéterminée et ladite mémoire-tampon de petite capacité, une mémoire d'octet de format de valeur nulle et des seconds moyens de commutation pour relier ladite mémoire d'octet de format à la mémoire de données, à chaque transmission de paquet, quand ledit fil supplémentaire est au niveau 1, les premiers et seconds moyens de commutation étant au repos quand ledit fil supplémentaire est au niveau 0 (ou 1).

Suivant une autre caractéristique, il est prévu un équipement de réception du système de diffusion de données, dans lequel les signaux qui suivent le préfixe, quand celui-ci y est accepté, sont envoyés dans une mémoire-tampon dont la sortie est reliée à un cricuit de sortie, avec un registre de signal de format emmagasinant le signal de format du préfixe de chaque paquet reçu et un compteur alimenté par un signal d'horloge à la fréquence des octets qui, quand il atteint un compte maximal, vide la séquence des données de la mémoire-tampon dans le circuit de sortie, la longueur de la séquence étant limitée par le contenu dudit registre de format, qui est alimenté par un circuit de transcodage traitant le signal de format diffusé, caractérisé en ce que le circuit de transcodage comprend des moyens pour reconnaître la valeur nulle d'un octet de format, des moyens pour traduire cette valeur nulle en valeur Nmax transmise audit registre de format, et un fil supplémentaire de sortie relié audit circuit de sortie.

Les caractéritiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la fig. 1 représente le bloc-diagramme d'un système de diffusion de données dans lequel sont apportés les perfectionnements suivant l'invention;

la fig. 2 est un diagramme de paquets de données permettant d'illustrer le fonctionnement du système de la fig. 1;

la fig. 3 est un bloc-diagramme de la partie logique de l'équipement d'émission;

la fig. 4 est un schéma permettant d'illustrer le mode de fonctionnement de la partie logique de la fig. 3 dans le cas de transmission de données de la couche 4;

la fig. 5 est un bloc-diagramme d'un équipement de réception de données, et

la fig. 6 est un schéma du circuit de transcodage de l'équipement de réception de la fig. 5.

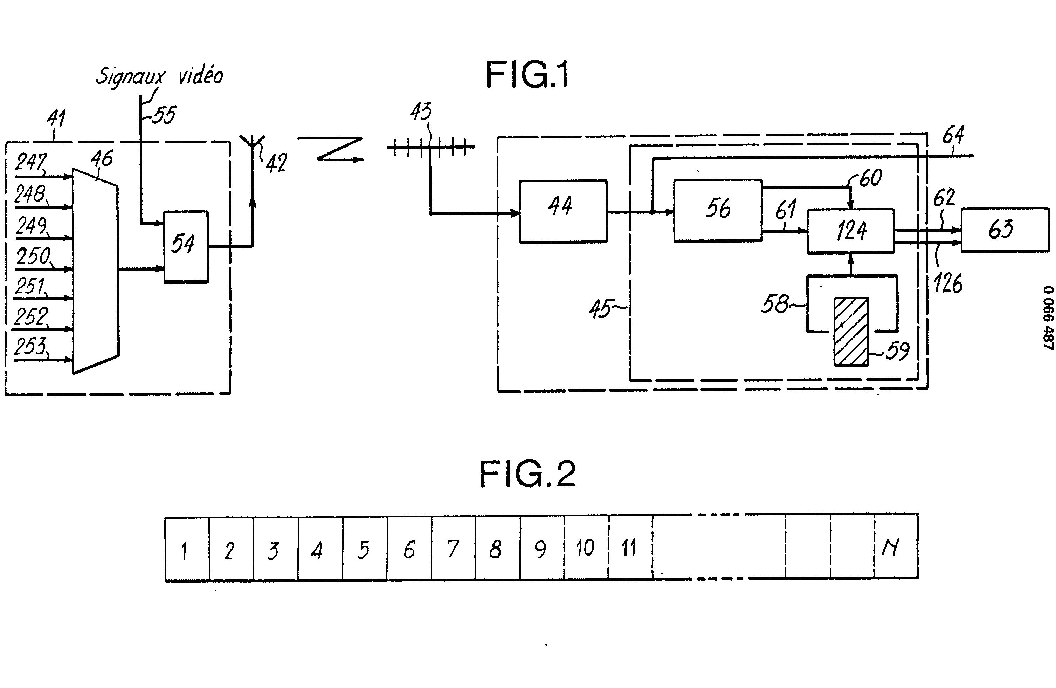

Le système de diffusion de données de la fig. 1 comprend une station émettrice comportant un équipement d'émission 41 et une antenne de télédiffusion 42, ainsi qu'une pluralité de postes récepteurs d'abonnés comportant une antenne de réception 43, un récepteur de télévision 44 et un équipement de réception de données 45.

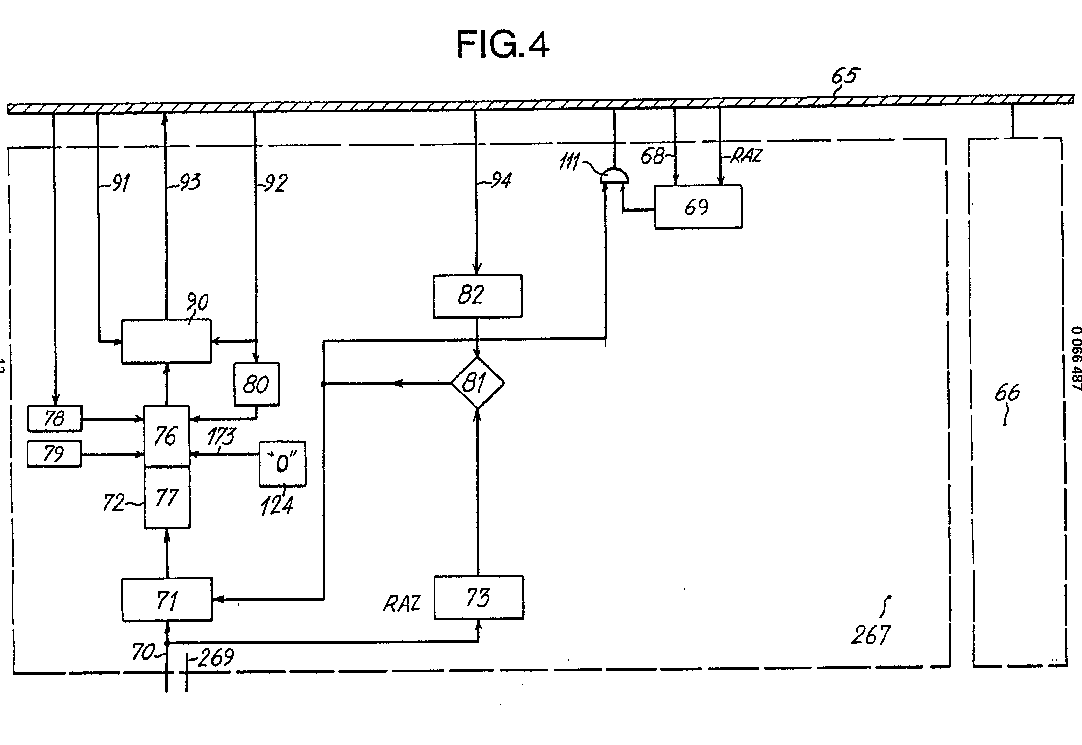

L'équipement d'émission 41 comprend une unité 46, dite gérant, qui est chargée de multiplexer dans le temps les messages de données provenant d'une pluralité de sources de données qui, dans l'exemple décrit, est supposée limitée à sept sources 247 à 253, sources qui sont capables de transmettre des données classiques aussi bien que des données offrant des possibilités de correction d'erreurs et de chiffrement. L'équipement 41 comprend encore une partie modulation 54 qui reçoit, d'une part, les signaux transmis par le gérant et, d'autre part, des signaux vidéo par une liaison 55, et qui transmet des signaux à un émetteur classique, non montré, qui alimente l'antenne 42. A titre d'exemple, on trouvera la description d'une partie modulation 54, qui ne fait pas partie de la présente invention, dans le brevet FR-A N° 2313825 déjà cité, et en particulier en relation avec la fig. 4 de celui-ci.

La fig. 2 montre un exemple de paquets de données transmis par le gérant 46, puis, après modulation, par l'antenne 42.

Le paquet a une longueur de N octets numérotés de 1 à N et se compose de deux parties. La première partie, appelée préfixe, est élaborée sous le contrôle du gérant 46 et est constituée, dans l'exemple montré, des huit premiers octets 1 à 8. La seconde partie, constituée des octets 9 à N, avec N−9 = M, constitue les données proprement dites ou utiles du paquet. Le nombre N reste toujours inférieur à un nombre Nmax qui peut varier, suivant le standard du réseau de télévision qui assure la télédiffusion, et peut être déterminé par optimisation, compte tenu de la longueur de la ligne utile de télévision et de la bande passante. Ainsi, dans le standard français à 625 lignes, Nmax peut atteindre 40, ce qui correspond à la norme L recommandé par le CCIR.

Dans le préfixe, les octets 1 et 2 sont réservés à la synchronisation des bits du paquets et se composent chacun de la séquence de bits 10101010. L'octet 3, dit de début, permet classiquement d'effectuer la synchronisation octet par octet et peut correspondre à la séquence 11100111. Les octets 4, 5 et 6 sont réservés à l'identification de la voie numérique, ou source, et sont élaborés sous forme codées par le gérant 46. L'octet 7, dit de continuité, permet de compter les numéros ou indices de paquets de 1 à 15 et, donc, de rendre compte des omissions de paquets ou d'erreurs dans l'équipement de réception. Enfin, l'octet 8 indique le format du paquet, c'est-à-dire le nombre d'octets M qui suivent le préfixe pour former le paquet.

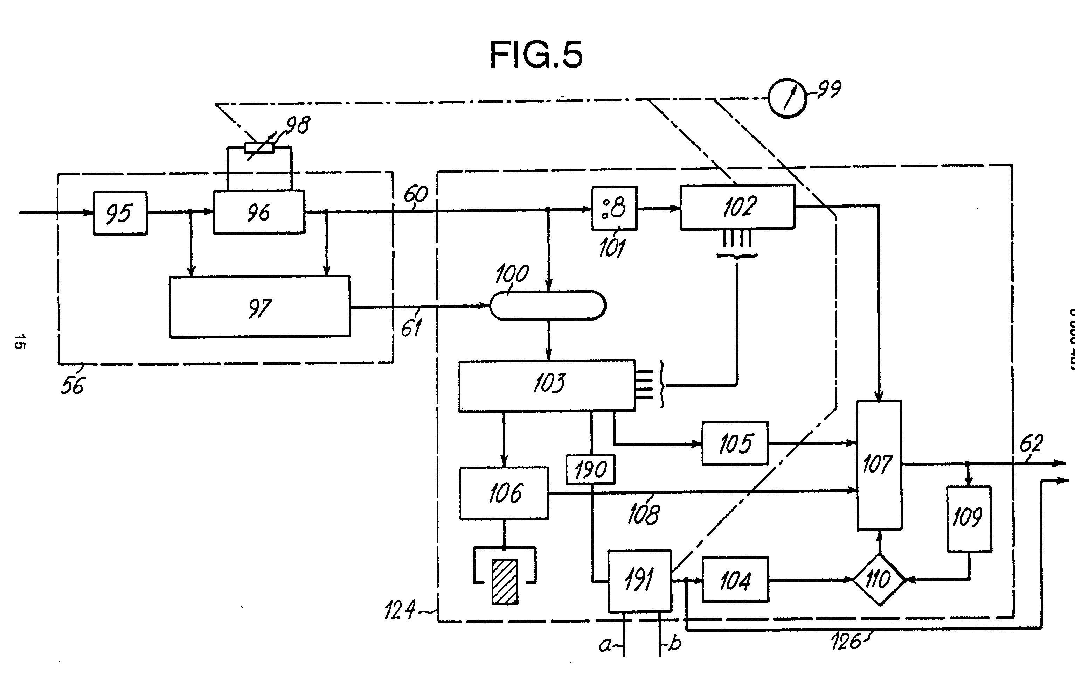

En se référant à nouveau à la fig. 1, le récepteur de télévision 44 transmet, par sa sortie vidéo, les signaux vidéo à l'équipement 45. Celui-ci comprend une partie démodulation 56, une partie logique 124 et un lecteur 58 d'un support codé 59. La partie démodulation 56 délivre à 124 un signal de fréquence bit par 60 et les (N−3) × 8 derniers bits du paquet de N octets par 61. Les informations lues par le lecteur 58 sont appliquées en permanence à la partie logique 124. En ce qui concerne le rôle du support codé 59, on pourra se reporter utilement au brevet FR-A N° 2313825 déjà cité. La partie réception 124 délivre en 62 les octets des données du paquet à un terminal approprié, tel que 63, plus un signal sur une liaison 176 qui sera décrite à la fig. 5.

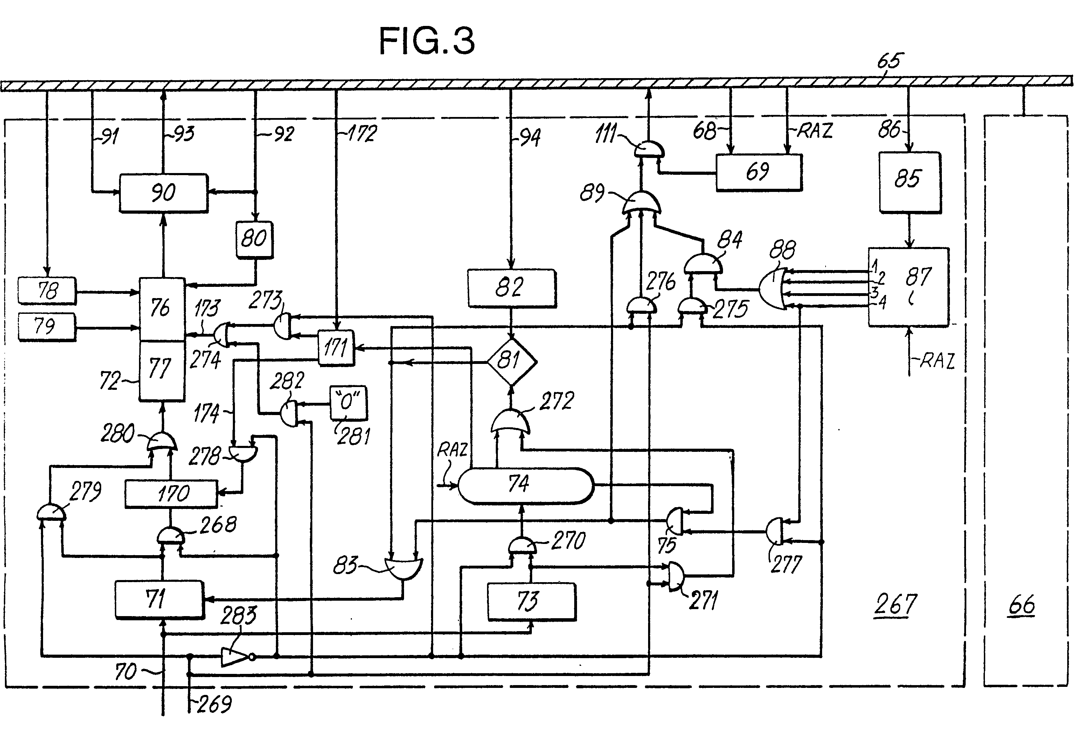

La fig. 3 montre une ligne omnibus 65, un circuit de commande 66 et un coupleur 267, capable de relier l'une quelconque des sources 247 à 253 à la ligne 65. A noter qu'il y a autant de coupleurs que de sources. En pratique, la ligne 65, le circuit 66 et les coupleurs 267 constituent le gérant 46, fig. 1. Le circuit de commande 66 est relié à 65 et peut commander aux coupleurs 267 de se connecter à 65. Le circuit 66 ne sera pas décrit en détail, car il est identique au circuit 76 de la fig. 3 du brevet français FR-A N° 2313825. On rappellera simplement que le circuit 66 émet, sous forme d'adresses, des interrogations vers les coupleurs afin de collecter les identités des coupleurs prêts à émettre, puis émet successivement des ordres de transmission vers ces coupleurs.

Dans le coupleur 267, les interrogations issues de 66 entrent par la liaison 68 reliée à un circuit d'identification d'adresse 69 comprenant les composants 90, 92 et 126 de la fig. 3 du brevet français FR-A Nᵒ 2313825. Le circuit 69 a sa sortie reliée à la première entrée d'une porte ET 111 dont la sortie est reliée à 65.

Les données provenant de la source associée au coupleur 267 sont transmises par une jonction 70 du type de celle décrite dans le brevet FR-A Nᵒ 2268308. Par la jonction 70, les données entrent, en octets parallèles, dans un circuit logique d'entrée 71 dont la sortie est reliée, d'une part, à une entrée d'une porte ET 268 et, d'autre part, à une entrée d'une porte ET 279. La sortie de la porte ET 268 est reliée à l'entrée d'une mémoire-tampon intermédiaire 170 dont la sortie est reliée à l'entrée d'une porte OU 280 dont la sortie est reliée à l'entrée d'une mémoire-tampon 72. La sortie de la porte ET 279 est reliée à l'autre entrée de la porte OU 280. Parallèlement, à la liaison 70, la source est reliée au coupleur 267 par un fil 269 dont le niveau 1 indique que la source transmet des données de couche 4, et dont le niveau 0 indique qu'il transmet des données classiques.

Par ailleurs, le fil de service aller de la liaison 70, qui transmet un changement d'état pour chaque octet transmis par 70, est relié à l'entrée d'un compteur d'octets 73 dont la sortie est reliée, d'une part, à une entrée d'une porte ET 270 dont la sortie est reliée à un registre 74 qui contient le nombre d'octets transmis par 71 à la mémoire-tampon intermédiaire 170 et, d'autre part, à une entrée d'une porte ET 271 dont la sortie est reliée à une entrée d'une porte OU 272. Le registre 74 a une entrée de remise à zéro (RAZ) reliée à la ligne 65, une sortie reliée à la première entrée de la porte ET 75, une sortie reliée à la seconde entrée de la porte OU 272, et une sortie reliée à l'entrée d'un compteur à mémoire 171. Le compteur 171 a une entrée de commande reliée, par une liaison 172, à la ligne 65, et sa sortie est reliée à une entrée d'une porte ET 273 dont la sortie est reliée à une entrée d'une porte OU 274 dont la sortie est reliée à la mémoire 72 par la liaison 173.

La mémoire-tampon 72 comprend deux parties, l'une 76 dans laquelle sont enregistrés les octets du préfixe de paquet et l'autre 77 dans laquelle sont enregistrés des octets de données provenant de la source par 71 et 170. La partie 76 a une première entrée reliée à une mémoire 78 qui contient les octets 1 à 3 de synchronisation et de début, une seconde entrée reliée à une mémoire 79 qui contient les trois octets 4 à 6 d'identification de chaque préfixe de paquet, une troisième entrée reliée à un compteur de paquets 80 qui délivre le numéro du paquet, c'est-à-dire l'octet de continuité, et une quatrième entrée reliée à la sortie de la porte OU 274 qui délivre, au moment de la transmission, soit le nombre des octets contenus dans la partie 77, c'est-à-dire le contenu du compteur 171, soit la valeur 0 contenue dans une mémoire 281 dont la sortie est reliée à une entrée d'une porte ET 282 dont la sortie est reliée à la seconde entrée de la porte OU 274, c'est-à-dire l'octet de format quelle qu'en soit l'origine.

Une sortie du registre 74 est également reliée à la seconde entrée de la porte OU 272 dont la sortie est reliée à la première entrée d'un comparateur 81 dont la seconde entrée est reliée à la sortie d'une mémoire 82 contenant le nombre Mmax = Nmax − 8, qui correspond au nombre maximal des octets de données pouvant être transmis dans un paquet. La sortie de 81 est reliée à une entrée d'une porte OU 83, à une entrée d'une porte ET 275 dont la sortie est reliée à la première entrée d'une porte ET 84, et à une entrée d'une porte ET 276 dont la sortie est reliée à une troisième entrée de la porte OU 89. La sortie de la porte OU 83 est reliée à une entrée d'inhibition du circuit 71.

Le coupleur comprend encore un circuit de simulation 85, qui reçoit une indication de vitesse provenant de 66 par 65 et une liaison 86. Cette indication dépend de la vitesse de fonctionnement des équipements de réception capables de recevoir les données de la source. Avec cette information de vitesse, le simulateur 85 simule des vidages de la mémoire-tampon 72, ces vidages étant comptés dans un compteur 87 relié à la sortie de 85. Les sorties de compte 1 à 4 de 87 sont reliées aux entrées d'une porte OU 88 dont la sortie est reliée à la seconde entrée de la porte ET 84. De plus, la sortie 4 de 87 est reliée à une entrée d'une porte ET 277 dont la sortie est reliée à la seconde entrée de la porte ET 75. Les sorties des portes ET 75 et 84 sont respectivement reliées aux deux premières entrées de la porte OU 89 de la sortie est reliée à la seconde entrée de la porte ET 111. La sortie de la porte ET 75 est encore reliée à une entrée de la porte OU 83.

La sortie de la mémoire 72 est reliée à un circuit logique d'émission 90 qui reçoit de 65, par la liaison 91, le signal de fréquence des bits et, par la liaison 92, l'ordre d'émission provenant du circuit de commande 66. La sortie du circuit 90 est reliée à la ligne 65 par le fil 93 qui transmet en série, bit par bit, le paquet vers la partie modulation de l'équipement d'émission. La liaison 92 est également reliée à l'entrée du compteur 80 qui, ainsi, peut compter les paquets émis par le coupleur 267.

Comme on l'a mentionné ci-dessus, le circuit 171 a une sortie reliée, par la porte ET 273, la porte OU 274 et la liaison 173, à la partie 76 de 72. Sa seconde sortie est reliée à une entrée d'une porte ET 278 dont la sortie est reliée, par une liaison 174, à l'entrée de commande de lecture de la mémoire-tampon 170. La mémoire 170 est une mémoire dont le contenu se vide dans la partie 77 de 72 à chaque ordre de lecture provenant de 171.

Dans le coupleur 267, le fil 269, parallèle à la liaison 70, est relié, d'une part, aux secondes entrées des portes ET 271, 276, 279 et, d'autre part, à l'entrée d'un inverseur 283 dont la sortie est reliée aux secondes entrées des portes ET 268, 270, 273, 275, 277 et 278.

Quand le fil 269 est au niveau 0, le fonctionnement du coupleur 267 est identique à celui du brevet EP-A Nᵒ 0026708, car les portes ET 268, 270, 273, 275, 277 et 278 sont ouvertes par le signal de sortie de l'inverseur 283 qui est au niveau 1. Quand le fil 269 est au niveau 1, le fonctionnement est un peu modifié. En effet, le circuit de simulation 85 et ses circuits associés 87 et 88 n'interviennent plus dans le fonctionnement, non plus que le registre 74, le compteur 171 et la mémoire-tampon intermédiaire. Si l'on ne tient pas compte des portes ET 271, 276, 279 et des portes OU 83, 89, 272, 274 et 280, qui ne servent que de points de passage, les circuits qui interviennent effectivement dans le fonctionnement intelligent du coupleur sont ceux qui sont représentés sur le schéma de la fig. 4.

On sait que la mémoire 72 est vidée vers 65, quand l'émission du paquet est autorisée et quand la condition suivante se présente, à savoir que le nombre d'octets introduits dans 77 égale la valeur maximale emmagasinée dans 82. Dès que le comparateur 81 a détecté une égalité sur ses deux entrées, le circuit 71 arrête la transmission sur la liaison 70, car son entrée de commande est inhibée. Il apparaît nettement que, dans chaque paquet, le contenu de l'octet de format est 0.

Il faut encore noter que l'opérateur de la source associée au coupleur considéré ne transmet toujours que des données significatives et qu'il n'a à se préoccuper ni du nombre Mmax, ni de la fréquence de transmission des bits.

La partie démodulation d'un équipement de réception d'abonné est montré à la fig. 5. Les signaux sortant du récepteur de télévision 44 sont appliqués à un circuit d'adaptation d'impédance 95 dont le signal de sortie est appliqué, d'une part, à un circuit 96 de récupération de la fréquence des bits et, d'autre part, à un circuit de synchronisation 97. Le circuit de synchronisation 97 comporte les circuits portant les références numériques à la fig. 5 du brevet FR-A No 2313825 et sert à reconnaître notamment l'octet de début de manière à ne transmettre à la partie logique 124, par la liaison 61, que le quatrième octet de chaque paquet et les suivants. Le circuit 96 comporte, comme les circuits classiques de récupération de la fréquence des bits, un circuit accordé comprenant un composant à impédance variable 98, qui peut être une varicap, dont l'impédance est commandée par le sélecteur de canal de télévision 99. Le circuit 96 délivre le signal de fréquence des bits, d'une part, au circuit de synchronisation 97 et, d'autre part, au circuit 124 par la liaison 60.

Dans le circuit 124, le signal à la fréquence des bits est appliqué, d'une part, à un registre d'octet 100 et, d'autre part, à un diviseur par huit 101 dont la sortie est reliée à l'entrée d'un compteur d'octets 102. Les bits du paquet sont appliqués par 61 en série à l'entrée de données du registre d'octets 100 qui transmet les octets en parallèle à un circuit d'aiguillage 103. Le compteur d'octets 102 a ses six premières sorties correspondant aux six premiers octets reçus dans 124, c'est-à-dire aux octets 4 à 9, reliées à des entrées de commande du circuit d'aiguillage 103, dont les entrées activées successivement ont pour effet d'orienter successivement les octets du paquet vers le circuit de validation 106 pour les octets 4, 5, 6 et 7, vers un circuit de correction de Hamming 190 pour l'octet 8, et vers une mémoire-tampon de données 105 pour les octets suivants. La sortie du circuit de correction 190 est reliée à l'entrée d'un circuit de transcodage 125 dont la sortie est reliée au registre de format 104.

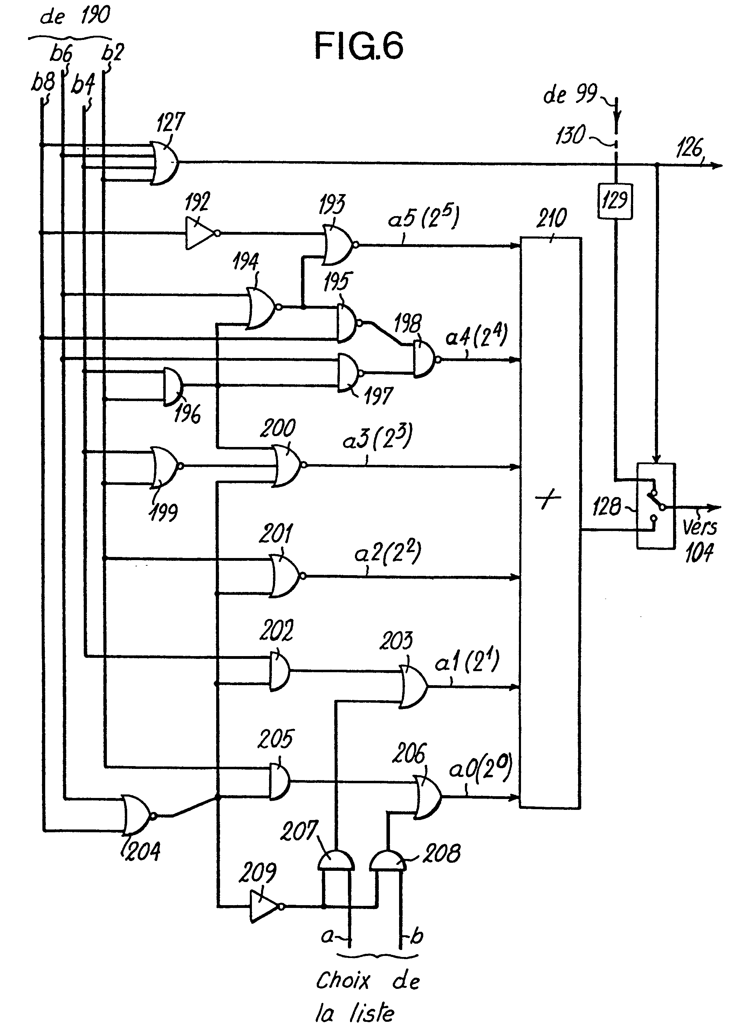

Le circuit de validation 106 peut comprendre les circuits 168, 179, 166, 171, 167 montrés à la fig. 6 du brevet FR-A No 2313825 déjà cité et, éventuellement, les circuits 173 et 174 de cette même figure. Le circuit valide les données reçues pour leur utilisation locale.

La sortie de la mémoire-tampon 105 est reliée à l'entrée d'un circuit d'aiguillage 107 qui peut être activé par une liaison 108 provenant de 106. La sortie de 107 est reliée à une jonction 62, du type de la jonction 70 de la fig. 3, qui est reliée à l'équipement d'utilisation 63. Un fil de la jonction 62 est relié à l'entrée d'un compteur 109 comptant les octets transmis par 107 et dont la sortie est reliée à une entrée d'un comparateur 110 dont l'autre entrée est reliée à la sortie du registre de format 104 et dont la sortie est reliée à une entrée d'inhibition du circuit 107. Enfin, la sortie du compteur d'octets 102 est reliée à une entrée de validation du circuit 107.

Le compteur 102 active sa sortie quand il atteint le compte Nmax. A ce moment, la mémoire-tampon 105 a reçu Nmax octets dont éventuellement seuls P octets de paquet sont valables, P représentant la longueur totale du paquet. En supposant que le circuit 106 valide le paquet, dès que le compteur 102 valide sa sortie, les octets peuvent être transférés de 105 à 62 par l'intermédiaire de 107. Dès que P octets ont été ainsi transférés, les entrées du comparateur 110 ont des valeurs égales et la sortie de 110 interdit toute autre trasmission de 105 à 62, pour la ligne de télévision considérée qui sert de support au paquet.

Dans le circuit de la fig. 5, le circuit de correction de Hamming est un circuit classique qui ne sera pas décrit, tandis que le circuit de transcodage 191 permet, à partir des bits b2, b4, b6 et b8 de l'octet de format, de retrouver la longueur réelle du bloc, qui est transmise à 104, ou de déterminer qu'il s'agit d'un paquet de données de couche 4. A titre d'exemple, le circuit 191 peut être prévu sous la forme indiquée à la fig. 6.

A la fig. 5, la sortie du sélecteur de canal de télévision 99 est également reliée à une entrée de commande du circuit de transcodage 191 qui comporte non seulement une sortie vers le registre 104, mais une seconde sortie 126 qui suit un trajet parallèle à la liaison 62.

Dans le circuit de la fig. 6, les fils d'entrée b2, b4, b6 et b8 transmettent les quatre bits délivrés par le circuit de correction 190, dans l'ordre croissant des poids. Le fil d'entrée b8 est relié, d'une part, à l'entrée d'un inverseur 192 dont la sortie est reliée à une entrée d'une porte NOR 193 dont la sortie délivre un signal de valeur $2^5$ ou 0 sur le fil a5 et, d'autre part, à une entrée d'une porte NAND 195 dont la sortie est reliée à une entrée d'une porte NAND 198 dont la sortie délivre un signal de

valeur $2^4$ ou 0 sur le fil a4. Le fil d'entrée b6 est relié, d'une part, à une entrée d'une porte NOR 194 dont la sortie est reliée à la seconde entrée de la porte NAND 195 et à la seconde entrée de la porte NOR 193 et, d'autre part, à une entrée d'une porte NAND 197 dont la sortie est reliée à la seconde entrée de la porte NAND 198. Le fil d'entrée b4 est relié, d'une part, à une entrée d'une porte ET 196 dont la sortie est reliée à la seconde entrée de la porte NOR 194, à la seconde entrée de la porte NAND 197 et à la première entrée d'une porte NOR à trois entrées 200 et, d'autre part, à la première entrée d'une porte NOR 199 dont la sortie est reliée à la seconde entrée de la porte NOR 200 dont la sortie délivre un signal de valeur $2^3$ ou 0 sur le fil a3. Le fil d'entrée b2 est relié, d'une part, à la seconde entrée de la porte NAND 196, d'autre part, à la seconde entrée de la porte NAND 199 et, enfin, à la première entrée d'une porte NOR 201 qui délivre un signal de valeur $2^2$ ou 0 sur le fil a2. Le fil d'entrée b4 est encore relié à une entrée d'une porte ET 202 dont la sortie est reliée à une entrée d'une porte OU 203 qui délivre un signal de valeur $2^1$ ou 0 sur le fil a1. Le fil d'entrée b2 est encore relié à la première entrée d'une porte ET 205 dont la sortie est reliée à une entrée d'une porte OU 206 qui délivre un signal de valeur $2^0$ ou 0 sur le fil a0. Le fil b6 est encore relié à une entrée d'une porte NOR 204 dont la sortie est reliée, en parallèle, à la troisième entrée de la porte NOR 200, à la seconde entrée de la porte NOR 201, à la seconde entrée de la porte ET 202, à la seconde entrée de la porte ET 205 et à l'entrée d'un inverseur 209. La sortie de l'inverseur 209 est reliée aux premières entrées de deux portes ET 207 et 208. La sortie de la porte 207 est reliée à la seconde entrée de la porte OU 203, et la sortie de la porte 208 est reliée à la seconde entrée de la porte OU 206. Les secondes entrées des portes ET 207 et 208 sont respectivement reliées à deux fils de commande a et b.

Les valeurs des sorties a5 à a0 sont additionnées dans l'additionneur 210 avant d'être appliquées au registre 104.

Les fils d'entrée b2, b4, b6 et b8 sont encore reliés aux quatre entrées d'une porte OU 127 dont la sortie est reliée à l'entrée de commande d'un commutateur électronique 128 dont une première entrée de signal est reliée à la sortie de l'additionneur 210 et dont la sortie est reliée au registre 104. La seconde entrée de signal du commutateur 128 est reliée à la sortie d'une mémoire 129 dans laquelle est emmagasiné un nombre prédéterminé, qui est de préférence le nombre maximal Nmax d'octets. La liaison 130 entre 99 et 129 permet de faire varier le nombre Nmax en fonction du canal de télévision sélectionné. La sortie de la porte OU 127 est encore reliée à la liaison 126.

Quand l'octet de format a une valeur non nulle, la sortie de la porte OU 127 est à 1, ce qui commute la sortie de l'additionneur 210 vers le registre 104; le fonctionnement est celui qui est décrit dans le brevet EP-A N° 0026708 déjà cité. Quand l'octet de format a une valeur nulle, la sortie de la porte OU 127 est à 0, ce qui commute la sortie de la mémoire 129 vers le registre 104 qui enregitre donc le nombre Nmax. Par ailleurs, par la liaison 126, la sortie de la porte OU 127 inidique en parallèle avec la liaison 62 que le paquet n'est pas un paquet classique.

## Revendications

1. Système de diffusion de données dans lequel la station émettrice diffuse, sous forme de paquets, des données numériques provenant éventuellement de plusieurs voies, chaque paquet comportant un préfixe contenant, outre des signaux de synchronisation classique et de code d'identification de voie, un signal de format de paquet indiquant normalement la longueur de la suite de données qui suit le préfixe quand les données transmises sont des données de télétexte, caractérisé en ce que, quand les données transmises ont des structures offrant des possibilités de correction d'erreurs et de chiffrement, la longueur des paquets transmis est toujours égale à la longueur maximale et le signal de format prend une valeur nulle.

2. Système suivant la revendication 1, dans lequel l'équipement d'émission comporte autant de coupleurs (67) que de voies, chaque coupleur (67) comprenant un circuit d'entrée dont l'entrée est reliée à la sortie de la voie associée au coupleur et dont la sortie est reliée à une mémoire de données (72) dont la sortie peut être connectée à un circuit de multiplexage (65) sous la commande (66) d'un circuit de commande commun à tous les coupleurs, et un compteur (87) alimenté à une cadence prédéterminée, l'ordre d'inhibition du circuit d'entrée (71) étant donné soit dès que ladite mémoire (72) est pleine, soit dès que ledit compteur (87) a atteint un compte prédéterminé, après quoi ladite mémoire (72) est connectée au circuit de multiplexage (65), puis vidée, ledit compteur (87) est remis à zéro et l'ordre d'inhibition supprimé, un registre (82) ayant une capacité maximale ajustable provoquant ledit ordre d'inhibition quand le compte desdites données atteint une valeur prédéterminée, avec, entre ladite mémoire (72) et ledit circuit d'entrée (71), une mémoire-tampon (170) de petite capacité, la lecture des données de la mémoire-tampon (170) étant commandée par un programmateur (171), caractérisé en ce qu'il est prévu un fil supplémentaire (269) entre chaque voie et son coupleur (67) associé, ledit fil supplémentaire (269) pouvant être porté à un niveau 1 (ou 0), et en ce que chaque coupleur (67) comprend des premiers moyens de commutation (268, 270, 273, 275, 277 et 278) pour isoler ledit compteur (87) alimenté à une cadence prédéterminée et ladite mémoire-tampon (170) de petite capacité, une mémoire (281) d'octet de format de valeur nulle et des seconds moyens de commutation (271, 276 et 279) pour relier ladite mémoire (281) d'octet de format à la mémoire de données (72), à chaque transmission de paquet, quand ledit fil supplémentaire (269) est au niveau 1 (ou 0), les premiers et seconds moyens de commutation étant au repos quand ledit fil supplémentaire est au niveau 0 (ou 1).

3. Equipement de réception du système de diffusion de données, utilisé dans un système suivant la revendication 2, dans lequel les signaux qui suivent le préfixe, quand celui-ci y est accepté, sont envoyés dans une mémoire-tampon (105) dont la sortie est reliée à un circuit de sortie (107), avec un registre de signal de format (104) emmagasinant le signal de format du préfixe de chaque paquet reçu et un compteur (102) alimenté par un signal d'horloge à la fréquence des octets qui, quand il atteint un compte maximal, vide la séquence des données de la mémoire-tampon (105) dans le circuit de sortie (107), la longueur de la séquence étant limitée par le contenu dudit registre de format (104), le registre de format (104) étant alimenté par un circuit de transcodage (191) traitant le signal de format diffusé, caractérisé en ce que le circuit de transcodage (191) comprend des moyens (127, 128) pour reconnaître la valeur nulle d'un octet de format, des moyens (129, 128) pour traduire cette valeur nulle en valeur Nmax transmise audit registre de format (104), et un fil supplémentaire (126) de sortie relié audit circuit de sortie.

**Claims**

1. A data transmission system wherein the transmitting station transmits, under the form of packets, digital data, possibly delivered from several channels, each packet including a prefix containing, in addition to the conventional synchronization signals and channel identification code signals, a packet format signal normally indicating the length of the data sequence following the prefix when the transmitted data are teletext data, characterized in that, when the transmitted data have such structures that they provide possibilities of error corrections and ciphering thereof, the length of the transmitted packets is always maximum and the format byte value is nil.

2. A data transmission system according to Claim 1, wherein the transmission equipment has as many couplers (67) as channels, each coupler (67) having an input circuit whose input is connected from the output of the channel associated to the concerned coupler and output is connected to a data memory (72) whose output can be connected to multiplexing circuit (65) under control (66) of a control circuit, common to all couplers, and a counter (87) fed at a predetermined rate, an inhibition control signal being delivered to said input circuit (71) as soon as either said data memory (72) is full, or said counter (87) has reached a predetermined count, then said data memory (72) is connected to said multiplexing circuit (65), then read out, then said counter (87) is reset and said inhibition control signal suppressed, a register (82) having a settable maximum capacity delivering said inhibition control signal when the count of said data reaches a predetermined value, with, between said data memory (72) and said input circuit (71), a small capacity buffer memory (170), read out of data from said buffer memory (170) being controlled by a programmed circuit (171), characterized in that an additional wire (269) is provided between each channel and the associated coupler (67), said additional wire (269) being switchable to level 1 (or 0), and in that each coupler (67) further includes first switching means (268, 270, 273, 275, 277 and 278) for switching off said counter (87) fed at a predetermined rate and said small capacity buffer memory (170), a format byte memory (281) storing the value nil and second switching means (271, 276, 279) for connecting said format byte memory (281) to said data memory (72), for each packet transmission, when said additional wire (269) is at level 1 (or 0), said first and second switching means being at rest when said additional wire is at level 0 (or 1).

3. A reception equipment of a data transmission system, utilized in a system according to Claim 2, wherein the signals following the prefix, once this one has been accepted, are transmitted to a buffer memory (105) whose output is connected to an output circuit (107), with a format signal register (104) storing the format signal of each received packet prefix and a counter (102) fed by the byte clock signal, said counter (102) controlling read out of the data sequence from said buffer memory (105) into said input circuit (107), as soon as it has reached a predetermined maximum count, the length of said data sequence being limited by the contents of said format signal register (104) that is fed from a transcoding circuit (191) processing the transmitted format signal, characterized in that said transcoding circuit (191) includes means (127, 128) for recognizing the value nil of a format byte, means (129, 128) for converting that value nil into the value Nmax that is transmitted to the format signal register (104), and an additional output wire (126) connected to said output circuit.

**Patentansprüche**

1. Ein Datenübertragungssystem, bei dem die sendende Station in Form von Paketen digitale Daten sendet, die gegebenenfalls von mehreren Kanälen geliefert werden, wobei jedes Paket ein Präfix umfasst, das ausser üblichen Synchronisationssignalen und Kanalidentifizierungskodesignalen ein Paketformatsignal enthält, das normalerweise die Länge der Datenfolge angibt, die dem Präfix folgt, wenn die übertragenen Daten Teletexdaten sind, dadurch gekennzeichnet, dass, wenn die übertragenen Daten eine Struktur haben, dass sie Möglichkeiten von Fehlerkorrekturen und deren Chiffrierung bieten, die Länge der übertragenen Pakete stets gleich der maximalen Länge ist und das Formatsignal den Wert Null hat.

2. Ein Datenübertragungssystem nach Anspruch 1, bei dem die Sendeausrüstung so viele Koppler (67) wie Kanäle hat, jeder Koppler (67) eine Eingangsschaltung besitzt, deren Eingang mit dem Ausgang des dem Koppler zugeordneten Kanals und deren Ausgang mit einem Datenspeicher (72) verbunden ist, dessen Ausgang mit einer unter der Kontrolle (66) einer allen Kopplern gemeinsamen Steuerschaltung stehenden Multiplexschaltung (65) verbunden sein kann, mit einem Zähler (87), der mit einer vorgegebenen Rate gespeist wird, wobei der genannten Eingangsschaltung ein Sperrsignal zugeführt wird, sobald entweder der Datenspeicher (72) voll ist oder der genannte Zähler (87) eine vorgegebene Zählung erreicht hat, worauf der genannte Datenspeicher (72) mit der Multiplexschaltung (65) verbunden wird, dann ausgelesen wird, dann der Zähler (87) auf Null zurückgestellt und das Sperrsignal unterdrückt wird, mit einem Register (82) das eine einstellbare maximale Kapazität hat und das Sperrsignal liefert, wenn die Zählung der Daten einen vorgegebenen Wert erreicht, mit einem Pufferspeicher (170) kleiner Kapazität zwischen dem genannten Datenspeicher (72) und der genannten Eingangsschaltung (71), wobei das Auslesen der Daten aus dem Pufferspeicher (170) durch eine Programmschaltung gesteuert wird, dadurch gekennzeichnet, dass eine zusätzliche Leitung (269) zwischen jedem Kanal und seinem zugeordneten Koppler (67) vorgesehen ist, wobei die zusätzliche Leitung (269) auf den Pegel 1 (oder 0) schaltbar ist, und dass jeder Koppler (67) ferner erste Schaltmittel (268, 270, 273, 275, 277 und 278) enthält, um den mit einer vorgegebenen Rate gespeisten Zähler (87) und den genannten Speicher (170) kleiner Kapazität abzuschalten, wobei ein Format-byte-Speicher (281) den Wert Null speichert, und zweite Schaltmittel (271, 276, 279), um den genannten Format-byte-Speicher (281) mit dem genannten Datenspeicher (72) für jede Paketübertragung zu verbinden, wenn die genannte zusätzliche Leitung (269) auf dem Pegel 1 (oder 0) ist, wobei die ersten und zweiten Schaltmittel in Ruhe sind, wenn die genannte zusätzliche Leitung auf dem Pegel 0 (oder 1) ist.

3. Empfangsausrüstung eines Datenübertragungssystems, die in einem System nach Anspruch 2 verwendet wird, bei der die dem Präfix folgenden Signale, nachdem dieses akzeptiert worden ist, zu einem Pufferspeicher (105) übertragen werden, dessen Ausgang mit einer Ausgangsschaltung (107) verbunden ist, mit einem Formatsignalregister (104), das das Formatsignal von jedem empfangenen Paketpräfix speichert, und einem von einem Taktsignal mit der byte-Frequenz gespeisten Zähler (102), wobei der genannte Zähler (102) das Auslesen der Datenfolge aus dem Pufferspeicher (105) in die genannte Eingangsschaltung (107) steuert, sobald er eine vorgegebene maximale Zählung erreicht hat, wobei ferner die Länge der genannten Datenfolge durch den Inhalt des Formatsignalregister (104) begrenzt ist, das von einer Transkodierungsschaltung (191) gespeist wird, die das übertragene Formatsignal verarbeitet, dadurch gekennzeichnet, dass die Transkodierungsschaltung (191) Mittel (127, 128) enthält, um den Wert Null eines Format-bytes zu erkennen, und dass Mittel (129, 128) vorgesehen sind, um den Wert Null in einen Wert Nmax umzuwandeln, der zum Formatsignalregister (104) übertragen wird, und dass eine zusätzliche Ausgangsleitung (126) mit der genannten Ausgangsschaltung verbunden ist.

FIG.1

Signaux vidéo

FIG.2

| 1 | 2 | 3 | 4 | 5 | 6 | 7 | 8 | 9 | 10 | 11 | | | | | | N |

# FIG.3

0 066 487

# FIG.4

# FIG.5

0 066 487

# FIG.6

de 190

b8 b6 b4 b2

127

192 193 a5 (2⁵) 210

194 195

198 a4 (2⁴)

196 197

200 a3 (2³)

199

201 a2 (2²)

202 203 a1 (2¹)

205 206 a0 (2⁰)

204

207 208

209

a b

Choix de la liste

de 99

130 126

129

128

Vers 104

17